# EUROPÄISCHE PATENTSCHRIFT

(11) **EP 0 702 771 B1**
(45) Veröffentlichungstag und Bekanntmachung des Hinweises auf die Patenterteilung: **07.01.1998**
(21) Anmeldenummer: 94921613.9
(22) Anmeldetag: 17.06.1994
(51) Int. Cl.: F23G 7/06, F23J 15/00, F23L 7/00, B01D 53/34

(54) **Einrichtung zum Reinigen von Abgasen**
Exhaust gas cleaning installation
Dispositif d'epuration de gaz brules

(30) Priorität: 17.06.1993 DE 4320044
(43) Veröffentlichungstag der Anmeldung: 27.03.1996
(73) Patentinhaber: DAS-DÜNNSCHICHT ANLAGEN SYSTEME GmbH DRESDEN, D-01217 Dresden (DE)
(72) Erfinder: REICHARDT, Horst, D-01257 Dresden (DE); RITTER, Lothar, D-01109 Dresden (DE); LABS, Lutz, D-01324 Dresden (DE); GEHMLICH, Konrad, D-01099 Dresden (DE); HENTRICH, Michael, D-01109 Dresden (DE); FIRKERT, Günter, D-01159 Dresden (DE); HENNIG, Volkmar, D-01157 Dresden (DE); SCHUBERT, Matthias, D-01109 Dresden (DE)
(74) Vertreter: Rau, Manfred, Dr. Dipl.-Ing.
(86) Internationale Anmeldenummer: EP9401985
(87) Internationale Veröffentlichungsnummer: WO9500805

(56) Entgegenhaltungen:
- EP-A- 0 346 893
- EP-A- 0 347 753
- DE-A- 3 916 705
- US-A- 5 123 836
- PATENT ABSTRACTS OF JAPAN vol. 5, no. 152 (C-73) 25. September 1981 & JP,A,56 084 619 (SEITETSU KAGAKU) 10. Juli 1981
- PATENT ABSTRACTS OF JAPAN vol. 17, no. 100 (C-1030) 26. Februar 1993 & JP,A,04 290 523 (EBARA) 15. Oktober 1992

## Beschreibung

Die Erfindung betrifft eine Einrichtung zur Reinigung von Abgasen, die insbesondere in Anlagen zur chemischen Dampfphasenabscheidung (CVD) und zum Abtragen oder Abscheiden durch Plasmaprozesse anfallen.

Derartige Abgase enthalten neben unbedenklichen Gasen, wie z.B. Stickstoff und Argon, toxische Schadstoffe, die durch das Reinigungsverfahren vollständig bzw. bis herab auf zulässige Grenzwerte beseitigt werden. Die Abgase werden zum Zwecke der Reinigung direkt nach der Fertigungsanlage oder nach Sammlung aus mehreren Anlagen durch die Reinigungseinrichtung geführt.

Zur Abgasreinigung sind eine ganze Reihe von Verfahren bekannt. Sehr häufig erfolgt sie durch Sorption der Schadstoffe, z.B. in einer oxidierenden wässrigen Lösung. Dazu wird das Abgas in einer Kolonne, in einem Sprühturm oder einer anderen Wascheinrichtung in intensiven Kontakt mit dem Sorptionsmittel gebracht. Schadstoffe, die auf diese Weise nicht oder wenig effizient sorbiert werden, können durch Verfahren der thermischen Zersetzung durch Aufheizen oder durch Verbrennung umgewandelt und aus dem Abgas beseitigt werden. Sind die toxischen Schadstoffe selbst nicht brennbar, so werden sie in einer Flamme unter Zufuhr von Sauerstoff im Überschuß verbrannt. Die Verbrennung erfolgt in einer Brennkammer mit Brenner, an deren Wänden sich feste Verbrennungsprodukte, z.B. SiO₂, niederschlagen. Da die Abscheidung fester Reaktionsprodukte in der Brennkammer nicht vollständig erfolgt, insbesondere aber, da bei der Verbrennung meist sekundäre, gasförmige Schadstoffe entstehen, werden bekanntermaßen mehrstufig wirkende Reinigungsverfahren eingesetzt, bei denen nacheinander Teilprozesse der Reinigung, wie thermische Zersetzung oder Oxidation, Kühlung, Hydrolyse, Sorption und Auswaschen fester Reaktionsprodukte ablaufen (0347754 A1). Nach der Brennkammer werden die Abgase in einen separaten Reaktionsraum überführt und dort mit einem Sorptionsmittel intensiv in kontakt gebracht. Es sind auch Einrichtungen zur Reinigung von Abgas vorgeschlagen worden. Dabei wird das Abgas nacheinander durch eine Einrichtung mit einer Brennkammer und mindestens eine weitere Einrichtung, die nach dem Waschprinzip arbeitet, geleitet, wobei diese konstruktiv eine Einheit bilden (0347753 A1). Die Brennkammer und ein äußerer separator Reaktionsraum sind durch eine innere Wand getrennt.

Ein Nachteil der Abgasreinigung mit thermischer Zersetzung oder Oxidation der Schadstoffe in einer Brennkammer unter Bildung fester Reaktionsprodukte ist es, daß sich diese an den Wandflächen der Brennkammer abscheiden. Bei großem Schadstoffdurchsatz wachsen auf diesen Wandflächen dicke Schichten auf. Diese Ablagerungen können bereits nach kurzer Zeit so stark werden, daß sie die Prozeßführung durch gestörte Strömungsverhältnisse stark beeinträchtigen oder sogar durch "Zuwachsen" unmöglich machen.

Ein weitere Nachteil besteht in der Korrosion des Materials der Wandflächen und anderer Bauteile der Brennkammer unter Wirkung gasförmiger Reaktionsprodukte der Verbrennung. Kritisch erhöht wird diese Korrosion durch die hohe Temperatur der verbrannten Abgase oder durch deren Zusammensetzung, wenn die Abgase z.B. Halogenwasserstoffe (z.B. HCL, HF) und Wasserdampf enthalten.

Außerdem kann sich nachteilig auswirken, daß beim Abkühlen der verbrannten Abgase auf dem Weg von der Brennkammer in eine nachfolgende Sorptionskammer oder Sorptionseinrichtung sekundäre, toxische Schadstoffe, z.B. Dioxine, entstehen.

Auch werden Ab- bzw. Adsorptionsverfahren eingesetzt, mit welchen eine partielle Entfernung von Schadstoffen aus dem Abgas gelingt (JP-PS 5812 2025, JP-PS 6203 0525, JP-PS 6213 6230).

Der Hauptnachteil dieser Verfahren besteht jedoch darin, daß die Toxine nicht beseitigt werden, sondern wiederum mit gleicher oder höherer Schadstoffkonzentration kontaminierte feste bzw. flüssige Absorptionsmittel entstehen, für welche nur die Einlagerung in eine Deponie möglich ist.

Der Erfindung liegt die Aufgabe zugrunde, die Wirksamkeit der Reinigung von Abgasen, insbesondere aus CVD- und Plasmaprozessen, mit Einrichtungen, in denen neben der thermischen Zersetzung oder Oxidation der Schadstoffe weitere Teilprozesse wie z.B. Sorption, erfolgen, zu verbessern. Weiterhin soll erreicht werden, daß die Korrosion von Teilen der Brennkammer im Interesse langer Lebensdauer verringert wird. Eine andere Teil-Aufgabe besteht darin, die Betriebszeit der Einrichtung zwischen zwei Säuberungszyklen zur Beseitigung von Ablagerungen fester Reaktionsprodukte deutlich zu verlängern. Darüber hinaus ist zu sichern, daß bei der Reinigung keine sekundären toxischen Schadstoffe entstehen.

Zur Lösung dieser Aufgabe dient eine Einrichtung die im wesentlichen aus einer vorzugsweise rotationssymmetrischen Brennkammer mit einem Brenner und aus Zuführungen für das Brenngas und für das toxische Schadstoffe enthaltende Abgas besteht. Gegebenenfalls wird dem Brenngas oder Abgas zusätzlich Sauerstoff beigemischt. Als Brenngas wird z.B. ein Wasserstoff-/Sauerstoff-Gemisch oder ein Erdgas-/Sauerstoff-Gemisch verwendet. Über dem Brenner bildet sich die Brenngasflamme aus. Das erhitzte bzw. verbrannte Brenn- und Abgas strömt durch die Brennkammer in Richtung eines Anschlusses für eine lufttechnische Anlage zur Abfuhr des gereinigten Abgases. Erfindungsgemäß wird in der Einrichtung im oberen Bereich der Brennkammer eine Sprüheinrichtung für eine Flüssigkeit angeordnet. Diese Sprüheinrichtung besteht aus einer Hohlkegeldüse und einer Vollkegeldüse, die beide in der Achse des Brenners befestigt sind. Der Abstand zwischen Brenner und Hohlkegeldüse wird derart eingestellt, daß er zur Ausbildung der Brenngasflamme und zur vollständigen thermischen Zersetzung bzw. Oxidation der toxischen Schadstoffe ausreicht. Die Hohlkegeldüse versprüht besagte Flüssigkeit derart, daß ein Winkelbereich um die Achse, in dem der Brenner angeordnet ist, frei von Flüssigkeit bleibt. Dieser Winkelbereich wird jedoch vorzugsweise auf Winkel 2 α größer als 50° eingestellt. Durch das Versprühen der Flüssigkeit mit der Hohlkegeldüse wird einerseits erreicht, daß im Raum zwischen Brenner und Hohlkegeldüse sich die Brennflamme ausbilden kann, ohne daß sie durch die Flüssigkeit gelöscht wird, andererseits wird durch den Flüssigkeitshohlkegel vermieden, daß der Strom des verbrannten Brenn- und Abgases mit Teilen in der Brennkammer, z.B. den Düsen und den Flüssigkeitszuführungen, in Kontakt kommt, ohne vorher in Kontakt mit der Flüssigkeit gewesen zu sein. Der axiale Abstand zwischen Hohlkegeldüse und Vollkegeldüse ist größer als der Radius der Brennkammer. Durch die Vollkegeldüse wird die Flüssigkeit in einen Vollkegel mit einem Winkel 2 β größer 90° versprüht. Wesentlich größere Winkel als 90° sind zweckmäßig, um den Raum der Brennkammer zwischen den Düsen möglichst vollständig mit feinverteilter Flüssigkeit zu erfüllen.

Der Hohlkegel fein verteilter Flüssigkeit wirkt infolge der hohen Dichte an Flüssigkeitströpfchen für die Flüssigkeit, die aus der Vollkegeldüse versprüht wird, als "Schutzschild", um das unkontrollierte Eindringen von Flüssigkeit in den Brennraum zu vermeiden.

Auf der Rückseite der Hohlkegeldüse wird eine in Richtung Gasstrom konvexe Fläche wirksam gemacht, deren Durchmesser größer oder gleich dem Durchmesser des Brenners ist. Dadurch wird gewährleistet, daß Flüssigkeit aus der Vollkegeldüse nicht direkt in den Brenner sprüht. Die konvexe Fläche wirkt als Spritzschutz. Auch von ihr abtropfende Flüssigkeit tropft außerhalb der Brennerfläche. Die Ausbildung der Brennflamme und die Verbrennung der toxischen Schadstoffe wird somit nicht durch Flüssigkeit aus der Vollkegeldüse beeinträchtigt.

Der Strom verbrannter Brenngase und toxischer Schadstoffe wird durch den Raum, der mit feinverteilter Flüssigkeit erfüllt ist, geführt. Hier erfolgen besagte nichtthermische Teilprozesse der Abgasreinigung. Es kann zweckmäßig sein, an die Brennkammer über eine Absaugleitung eine zusätzliche Sorptionseinrichtung, wie z.B. ein Entfeuchter, eine Wascheinrichtung oder ein Filter, nachzuschalten. Auf diese Weise wird eine weitere Reduzierung des in der Brennkammer gereinigten Abgases von schädlichen Bestandteilen erreicht. Die Nachschaltung einer zusätzlichen Sorptionseinrichtung empfiehlt sich besonders, wenn sie selektiv auf Schadstoffe wirkt, die in der Brennkammer nicht aus dem Abgas entfernt wurden.

Der Verbrauch an Sorptionsmittel läßt sich drastisch reduzieren, wenn das aus der Brennkammer abfließende Sorptionsmittel, welches Reaktionsprodukte der Abgasverbrennung und der Reaktion des verbrannten Abgases mit dem Wasser enthält, in einer Sorptionsmittelregenerierungsanlage regeneriert wird und das Sorptionsmittel im Kreislauf betrieben wird.

Eine weitere zweckmäßige Ausgestaltung der erfindungsgemäßen Einrichtung besteht darin, in einem Teil des Raumes zwischen den beiden Düsen eine Schicht von Füllkörpern einzubringen. Auf diese Weise wird die Kontaktfläche zwischen Flüssigkeit und Gasstrom in an sich bekannter Weise erhöht, ohne zu beeinträchtigen, daß zunächst der verbrannte Gasstrom mit feinverteilter Flüssigkeit in Kontakt kommt.

Sowohl die versprühte Flüssigkeit aus der Hohlkegeldüse als auch die aus der Vollkegeldüse schlägt sich auf den Wandflächen der Brennkammer nieder. Sie bildet auf diesen Wandflächen einen Flüssigkeitsfilm und läuft zum Boden der Brennkammer ab.

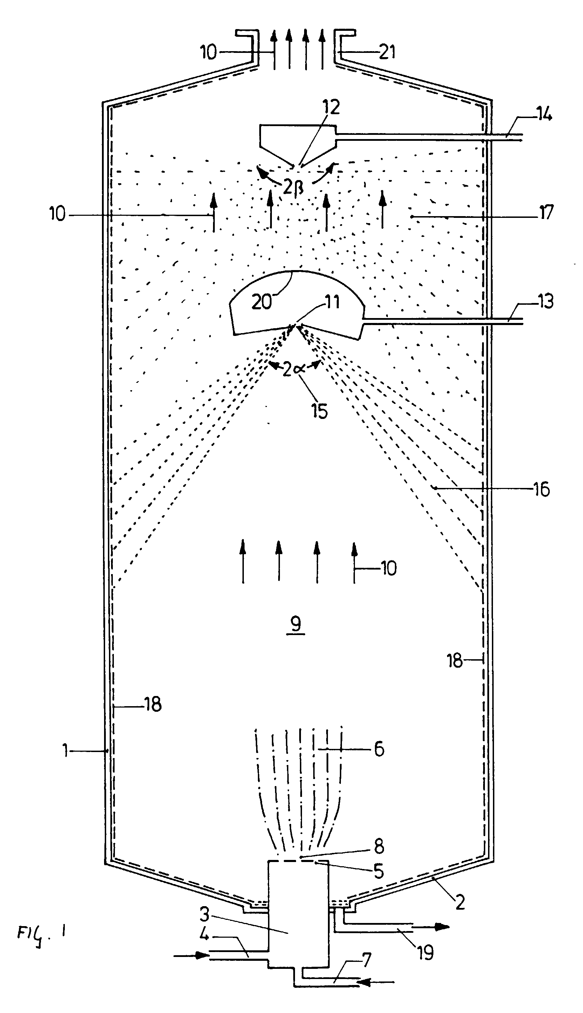

Die Erfindung wird anhand eines Verfahrensbeispiels und der Zeichnung einer bevorzugten Ausführungsform der Vorrichtung näher erläutert. Die Zeichnung zeigt die Einrichtung im Längsschnitt.

Die erfindungsgemäße Einrichtung besteht im wesentlichen aus einer zylindrischen Brennkammer 1 aus rostfreiem Stahlblech. Sie hat 18 cm Durchmesser und ist 60 cm hoch. Im Bereich des konisch ausgeführten Bodens 2 der Brennkammer 1 ist ein Brenner 3 angeordnet, dem das Brenngas H₂ und O₂ über eine Zufuhr 4 zugeführt wird. Der Brenner 3 hat einen Durchmesser von 25 mm.

Über den Öffnungen 5 bildet sich die Brenngasflamme 6 aus. Das Abgas mit den toxischen Schadstoffen wird dem Brenner 3 über die Zufuhr 7 zugeführt. Es tritt durch die Bohrung 8 zentral in die Brenngasflamme 6 ein. Im Brennraum 9 erfolgt die thermische Zersetzung bzw. Oxidation der Schadstoffe. Die Pfeile 10 markieren die Richtung des Stromes verbrannter Brenn- und Abgase. Im Abstand von ca. 40 cm vom Boden 2 bzw. 55 cm sind nacheinander und axial eine Hohlkegeldüse 11 und eine Vollkegeldüse 12 angeordnet und an den Zuführungen 13 bzw. 14 für Wasser als verwendetes Sorptionsmittel befestigt. Die Hohlkegeldüse 11 versprüht Wasser derart, daß der Winkelbereich 15 (2α ≈ 80°) im wesentlichen frei von Wassertröpfchen ist, und daß das versprühte Wasser einen etwa hohlkegelförmigen Raum 16 feinverteilt erfüllt. Wasser aus der Vollkegeldüse 12 erfüllt feinverteilt praktisch den ganzen Raum (2β ≈ 180°) zwischen den beiden Düsen 17. Das versprühte Wasser aus den Räumen 16 und 17 trifft auf die inneren Wandflächen der Brennkammer 3 und bildet einen Flüssigkeitsfilm 18 aus. An den Wandflächen fließt es in den konisch ausgeführten Boden 2 und wird dort über ein Abflußrohr 19 aus der Brennkammer 1 abgeleitet.

Die Rückseite der Hohlkegeldüse 11 ist als Kugelkalotte 20 mit einem Radius von 40 mm ausgeführt, der Durchmesser der Kalotte ist 60 mm.

Das gereinigte Abgas wird durch den Anschluß 21 in die lufttechnische Anlage abgeführt.

Ergänzt wird die Reinigungseinrichtung durch Zündvorrichtungen für die Brenngasflamme und Kontrolleinrichtungen für die Flüsse der Brenngase und das Wasser sowie Sensoren und Aktuatoren zur Erhöhung der Prozeßsicherheit.

### Beispiel für die Verfahrensführung:

In einer CVD-Anlage zur Abscheidung von Phosphorgas fallen sowohl bei der Schichtabscheidung auf Wafern als auch bei alternierend durchgeführten in-situ-Reinigungen der Prozeßkammer Abgasmengen von jeweils 55 l/min an. Das Abgas bei der Abscheidung enthält als Schadstoffe SiH₄, PH₃ und Oxidationsprodukte dieser Stoffe. Das Abgas bei der in-situ-Reinigung der Prozeßkammer enthält als Schadstoff das C₂F₆, welches thermisch zersetzbar und dann hydrolisierbar ist. Wesentlicher Bestandteil, vorzugsweise 90-95%, der Abgase für beide Prozesse ist Stickstoff.

Die Abgase werden der Reinigungsvorrichtung durch eine Abgasleitung zugeführt. In der Brennkammer 1 der Reinigungseinrichtung wird durch Zufuhr von 15 l/min Wasserstoff und 10 l/min Sauerstoff über einen Brenner 3 eine Brennflamme aufrechterhalten. Nach vollständiger Verbrennung des Wasserstoffes ist in der Brennflamme noch überschüssiger, erhitzter Sauerstoff vorhanden. In der Achse des Brenners 3 wird das Abgas zugeführt. Es erhitzt sich. Die Schadstoffe SiH₄ und PH₃ werden zu Siliziumdioxid und Phosphorpentoxid sowie Wasser oxidiert. C₂F₆ wird in HF und CO₂ zersetzt.

Das obere Drittel der Brennkammer 1 ist mit Tröpfchen von Wasser erfüllt. Dazu werden etwa 10 l/min Wasser in die Brennkammer 1 eingeführt und versprüht. Beim Auftreffen der Wassertröpfchen auf die inneren Wandflächen der Brennkammer 1 bildet sich auf diesen ein Wasserfilm 18 aus. Das Wasser fließt an den Wandflächen ab. Es wird im Bereich des Bodens 2 der Brennkammer 1 gesammelt und abgeführt. Das etwa 1000°C heiße, verbrannte Brenn- und Abgas strömt senkrecht vom Brenner 3 durch den mit Wassertröpfchen erfüllten Raum 16. Das feste Siliziumdioxid wird kolloidal in Wasser gelöst, das Phosphorpentoxid reagiert mit Wasser zur Phosphorsäure, das HF zu Flußsäure. Das gereinigte Abgas wird an der Deckelfläche der Brennkammer 1 abgeführt. Beim Auftreffen des heißen, verbrannten Brenn- und Abgases auf die Flüssigkeitströpfchen wird es auf kleiner 50°C abgekühlt. Reaktionsprodukte werden in den Wassertröpfchen sorbiert und mit diesem aus der Brennkammer transportiert.

## Patentansprüche

1. Einrichtung mit einer Brennkammer und einem Brenner mit Zuführungen für das Brenngas und das toxische Schadstoffe enthaltene Abgas, **dadurch gekennzeich** **net, daß** im oberen Bereich der Brennkammer (1) eine Sprüheinrichtung für eine Flüssigkeit in der Achse des Brenners (3) angeordnet ist, daß die Sprüheinrichtung aus einer Hohlkegeldüse (11) und einer Vollkegeldüse (12) besteht, daß die Hohlkegeldüse (11) und die Vollkegeldüse (12) axial nacheinander entgegen der Richtung des Gasstroms angeordnet sind daß die Hohlkegeldüse (11) die Flüssigkeit in einem Hohlkegel versprüht, der in einem Winkelbereich (2α), in dem der Brenner (3) angeordnet ist, vorzugsweise mit einem Winkelbereich (2α) größer als 50° frei von Flüssigkeit ist, daß die Vollkegeldüse (12) Flüssigkeit in einen Vollkegel vorzugsweise mit einem Winkel größer als 90° versprüht, und daß auf der Rückseite der Hohlkegeldüse (11) eine in Richtung Abgasstrom konvexe Fläche wirksam ist, deren Durchmesser größer oder gleich dem Durchmesser des Brenners (3) ist.

2. Einrichtung nach Anspruch 1, **dadurch gekennzeichnet, daß** in einem Teil des Raumes zwischen den beiden Düsen (17) eine Schicht von Füllkörpern auf einem Trägergitter eingebracht wird.

3. Einrichtung nach einem der Ansprüche 1 oder 2, **dadurch gekennzeichnet, daß** an die Brennkammer (3) über das Abflußrohr (19) eine Sorptionsmittelregenerierungsanlage nachgeschaltet ist.

## Claims

1. An apparatus comprising a combustion chamber and a burner having inlets for the combustible gas and the waste gas which contains toxic agents, **characterized in that** the upper portion of the combustion chamber (1) is provided with a spraying device for a liquid disposed in the axis of the burner (3), in that the spraying device consists of a hollow-cone nozzle (11) and of a solid-cone nozzle (12), in that the hollow-cone nozzle (11) and the solid-cone nozzle (12) are disposed axially one after the other against the direction of the flow of gas, in that the hollow-cone nozzle (11) sprays the liquid in the form of a hollow cone, an angular spread (2 α) of which, preferably an angular spread (2 α) exceeding 50°, is free from liquid, which is where the burner (3) is disposed, in that the solid-cone nozzle (12) sprays liquid in the form of a solid cone, preferably by an angle of more than 90°, and in that on the rear of the hollow-cone nozzle (11), a surface convex in the direction of the flow of waste gas is effective, the diameter of which surface exceeding or equaling the diameter of the burner (3).

2. An apparatus according to claim 1, **characterized in that** a layer of fillers disposed on a supporting grid is inserted in part of the space (17) between the two nozzles.

3. An apparatus according to one of claims 1 or 2, **characterized in that** the combustion chamber (1) is topped by a sorbent regenerative system via the outlet (19).

## Revendications

1. Dispositif comportant une chambre de combustion et un brûleur avec des amenées pour le gaz combustible et pour le gaz brûlé contenant des toxiques, **caractérisé en ce que**, dans la partie supérieure de la chambre de combustion (1), un pulvérisateur pour un liquide est prévu dans l'axe du brûleur (3), en ce que le pulvérisateur se compose d'une tuyère à cône creux (11) et d'une tuyère à cône plein (12), en ce que la tuyère à cône creux (11) et la tuyère à cône plein (12) sont disposées axialement l'une après l'autre en sens inverse au courant de gaz, en ce que la tuyère à cône creux (11) pulvérise le liquide en forme d'un cône creux qui est exempt de liquide dans un angle (2 α), dans lequel se trouve le brûleur (3), de préférence dans un angle (2 α) de plus de 50°, en ce que la tuyère à cône plein (12) pulvérise du liquide en forme d'un cône plein, de préférence dans un angle de plus de 90°, et en ce que, sur le revers de la tuyère à cône creux (11), une surface convexe en sens du courant de gaz brûlé agit, dont le diamètre est supérieur ou égal au diamètre du brûleur (3).

2. Dispositif selon la revendication 1, **caractérisé en ce que,** dans une partie de l'espace (17) entre les deux tuyères, une couche de corps de remplissage est mise en place sur une grille de support.

3. Dispositif selon l'une quelconque des revendications 1 ou 2, **caractérisé en ce qu**'une installation de régénération de sorbants est intercalée à la suite de la chambre de combustion (1) par la voie du débouché (19).
